# EUROPÄISCHE PATENTSCHRIFT

(11) **EP 0 810 834 B1**
(45) Veröffentlichungstag und Bekanntmachung des Hinweises auf die Patenterteilung: **22.09.1999**
(21) Anmeldenummer: 96903918.9
(22) Anmeldetag: 22.02.1996
(51) Int. Cl.: A47C 3/02, A47C 21/00, A47D 9/02, A47C 16/02, A47C 9/02, E04F 15/22

(54) **SCHWINGFÄHIGER STEHBODEN**
VIBRATING FLOOR
SOL VIBRANT

(30) Priorität: 24.02.1995 DE 29503801 U
(43) Veröffentlichungstag der Anmeldung: 10.12.1997
(73) Patentinhaber: Haider, Eduard, D-95704 Pullenreuth (DE)
(72) Erfinder: Haider, Eduard, D-95704 Pullenreuth (DE)
(74) Vertreter: Voigt, Günter, Dipl.-Ing.
(86) Internationale Anmeldenummer: DE9600342
(87) Internationale Veröffentlichungsnummer: WO9625867

(56) Entgegenhaltungen:
- WO-A-86/06597
- WO-A-90/01886
- DE-A- 3 506 377
- DE-B- 2 319 667
- DE-C- 3 137 757
- DE-U- 8 531 386
- US-A- 1 640 326
- US-A- 4 517 778

## Beschreibung

Die Erfindung bezieht sich auf einen schwingfähigen Stehboden mit einem relativ zum auf dem Boden stehenden Unterteil beweglichen Oberteil, wobei Oberteil und Unterteil durch Schwingelemente miteinander verbunden sind und die Schwingelemente in horizontaler Ebene schwingfähig sind.

Aus der WO 90/01886 ist ein Sitz- oder Ruhemöbel bekannt, bei dem mindestens zwei Satz Pendel funktionell in Reihe geschaltet sind. Der eine Satz Pendel ist über Brücken und ein etwa galgenförmiges Gerüst aufgehängt. Die Brücken ihrerseits sind über das Gerüst miteinander verbunden. Durch diese besondere Anordnung wird bereits bei geringen Bewegungsimpulsen eine nahezu ungedämpfte Bewegung ermöglicht.

Aus der US-A-1 640 326 ist ein schwingfähiger Stehboden mit einem relativ zum auf dem Boden stehenden Unterteil beweglichen Oberteil bekannt, wobei Oberteil und Oberteil durch Federn miteinander verbunden sind.

Aus der DE-U-85 31 386 ist es bereits bekannt, ein Oberteil eines Gestells zur Aufnahme eines einzelnen Fußes eines Stuhles, eines Sessels, einer Liege oder eines Bettes über Seilpendel verschiedener funktional hintereinandergeschalteter Stufen und mit unterschiedlichen Eigenfrequenzen an einem Unterteil aufzuhängen.

Aus der DE-PS 31 37 757 ist ein Schwingboden für Sporthallen bekannt, der aus einem auf Tragelementen aufliegenden, den Druck verteilerden Unterboden besteht, auf dem ein Bodenbelag verlegt ist, wobei die Tragelemente permanent-elastisch ausgebildet sind und einen Tragkörper aufweisen, der einen bei lotrechter Belastung seine lichte Höhe verringernden Hohlraum umschließt. In den Hohlraum ragt der untere Teil eines von außen höhenverstellbaren, in dem Tragelement geführten und diesem gegenüber in der gewünschten Höhestellung arretierbaren Anschlags. Dieser bekannte Schwingboden erlaubt lediglich eine vertikale Bewegung, nicht jedoch eine horizontale.

Aus der DE-AS 23 19 667 ist ferner eine schwingende Tanzfläche mit mindestens einer federnd auf einem festen Untergrund gelagerten Platte und mit mindestens einem auf die Platte einwirkenden Schwingungserzeuger bekannt, wobei an der Unterseite der Platte als Schwingungserzeuger eine elektromechanischer Wandler befestigt ist, welcher die mit einer Tanzmusik modulierte zugeführte elektrische Tonfrequenzleistung in mechanische Schwingungen verwandelt. Auch diese schwingende Tanzfläche führt nur vertikale Bewegungen aus. Durch die Lagerung in sogenanten Wannen aus Stahlblech oder Kunststoff ist die Fläche gegen seitliche Verschiebung gesichert. Zwischen den Platten und der Unterkonstruktion befindet sich eine Lage aus Kunststoff oder Gummi, um Resonanzgeräusche während des Betriebs zu vermeiden. Mit dieser bekannten schwingenden Fläche werden weder horizontale Bewegungen ermöglicht noch wird die Fläche in Eigenfrequenz erregt.

Aus der EP-PS 0 259 325 ist schließlich ein Pendel bekannt, bei dem die beiden Enden mit jeweils einem Einspannkopf versehen sind und mit Ausnahme einer kurzen Zone in den Endbereichen des Pendels über dessen Länge verteilt eine Vielzahl von wulstartigen, relativ starren Körpern mit nur geringem gegenseitigen Abstand voneinander perlenähnlich angeordnet aufweisen. Von der schwingenden Lagerung eines Stehbodens ist in dieser Patentschrift nicht die Rede.

Für viele Personen, die ihre berufliche Tätigkeit im Stehen ausüben müssen, beispielsweise Chirurgen, Zahnärzte oder Redner, stellt das langzeitige Stehen in mehr oder weniger starrer Haltung bzw. in ablaufbedingten vorgegebenen Stellungen eine erhebliche Belastung dar. Hier besteht der dringende Wunsch nach einem dynamisch gelagerten Stehboden.

Darüber hinaus besteht auch im Therapiebereich der Wunsch nach einem dynamisch gelagerten Stehboden.

Der Erfindung liegt die Aufgabe zugrunde, einen zuverlässig funktionierenden, in der Horizontalebene schwingfähigen Stehboden zu schaffen.

Die Lösung dieser Aufgabe erfolgt erfindungsgemäß durch die Merkmale des Anspruchs 1.

Vorteilhafte Weiterbildungen ergeben sich aus den Unteransprüchen.

Es hat sich gezeigt, daß Personen, die auf einem solchen schwingfähigen Stehboden arbeiten, erheblich weniger belastet sind und offenbar wegen der dynamischen Komponente des Stehbodens weniger zu Ermüdungen oder Rückenschmerzen neigen. Selbstverständlich ist es äußerst wichtig, daß die dynamische Komponente des Stehbodens richtig dimensioniert ist. Bei einer zu geringen dynamischen Komponente treten die gewünschten dynamischen Eigenschaf ten verständlicherweise nur im geringen Umfang in Erscheinung; bei einer zu hohen dynamischen Komponente hingegen hat der Benutzer das Gefühl auf "schwankendem Boden" zu stehen. Die dynamische Komponente muß daher so gewählt werden, daß die Arbeitsfähigkeit in keiner Weise negativ beeinflußt wird.

Die Erfindung wird nachfolgend unter Bezugnahme auf die Zeichnungsfiguren beispielsweise erläutert. Es zeigen:
- Fig. 1: einen grundsätzlichen Aufbau eines innerinnerhalb eines Traggestells an Pendeln aufgehängten Stehbodens,
- Fig. 2: einen grundsätzlichen Aufbau eines StehStehboden, an dessen Unterseite Stützbögen angeordnet sind, die ihrerseits über Pendel am unterhalb des Stehbodens angeordneten Traggestell aufgehängt sind,
- Fig. 3: eine erfindungsgemäße Variante der Ausführung gemäß Fig. 2 mit einem mehrstufigen Pendelsystem,
- Fig. 4: eine Detaildarstellung zu Fig. 3, bei der auch eine gewisse Schräglage der Pendel bedarfsweise einstellbar ist,
- Fig. 5: einen Stehboden, bei dem die schwingende Lagerung über eine Kugel innerhalb zweier zugeordneter kalottenförmiger Aufnahmeschalen erfolgt sowie
- Fig. 6: eine Detaildarstellung der Lagerung gemäß Figur 5.

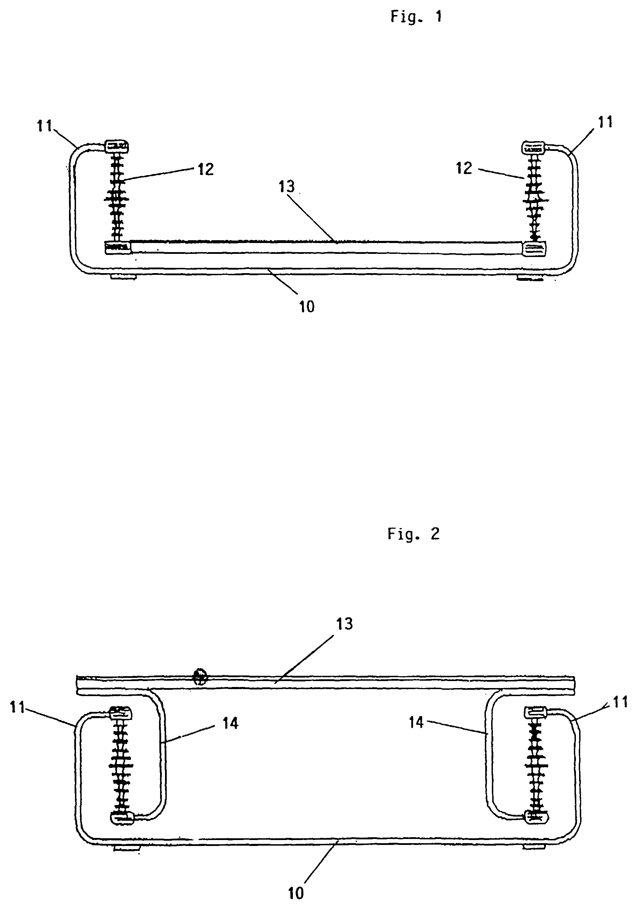

Ein Stehboden kann grundsätzlich auf verschiedene Weise schwingfähig gelagert werden. In Fig. 1 ist ein Traggestell 10 mit mindestens drei im wesentlichen galgenförmigen Tragbügeln 11 dargestellt, die über Pendel 12 einen Stehboden 13 derart halten, daß er im wesentlichen in einer Horizontalebene schwingfähig und somit zu seitlichen Bewegungen fähig ist. Selbstverständlich ergeben sich bei der Pendelbewegung auch geringe vertikale Bewegungskomponenten.

Es ist von entscheidender Bedeutung, daß die Pendel 12 zwar einerseits eine Pendelbewegung ermöglichen, andererseits aber auch eine gewisse Dämpfung sicherstellen, da die Auslenkbewegung ein gewisses Ausmaß verständlicherweise nicht überschreiten dürfen. Anderenfalls ginge die Standsicherheit für den Nutzer des Stehbodens verloren. Als besonders vorteilhaft haben sich Pendel gemäß EP-PS 0 259 325 erwiesen.

Über die Länge des Pendels 12 ist vorteilhafterweise in Reihe eine Vielzahl relativ starrer wulstartiger Körper 15 angeordnet, die mit nur geringem Abstand voneinander perlenähnlich über fast die gesamte Länge des Pendels angeordnet sind. Durch diese wulstartigen Körper mit nur geringem Abstand voneinander werden Schlingenbewegung des Pendels 12 während des Transports oder bei ähnlichen Einwirkungen mit Sicherheit vermieden. Der Durchmesser der perlenähnlich angeordneten, relativ starren wulstartigen Körper kann sich von den Endbereichen des Pendels 12 zur Mitte hin vergrößern. In der Nähe der Einspannköpfe bleibt eine relativ kurze Zone frei von den wulstartigen Körpern 15, um eine ungestörte Aufhängung an den Einspannköpfen und damit eine einwandfreie Funktion des Pendels sicherzustellen. Die Zwischenräume zwischen den einzelnen perlenähnlich angeordneten wulstartigen Körpern 15 können weitgehend mit einem elastischen Material aufgefüllt werden, das ggfs. auch die erwähnten Körper umgibt. Durch die Stärke der aufgetragenen elastischen Umhüllung kann das Verhalten des Pendels 12 beeinflußt werden. Eine Verstärkung dieser Schicht erhöht die Dämpfungseigenschaften. Durch eine Vielzahl von Abstufungen kann ein den jeweiligen Bedürfnissen exakt entsprechendes Pendel 12 geschaffen werden, das dann nur noch ausgewählt und eingehängt werden muß. Weitere Einzelheiten ergeben sich aus der EP-PS 0 259 325.

Fig. 2 zeigt einen weitgehend ähnlichen Aufbau eines Stehbodens 13, bei dem jedoch auf seiner Unterseite im wesentlichen drehsymetrisch zur Tragstütze 11 Aufnahmestützen 14 angeordnet sind, die am unteren Ende des Pendels 12 angreifen. Durch diese Konstruktion wird erreicht, daß in der Ebene des Stehbodens 13 eine Fläche entsteht, die frei von störenden Hindernissen ist, wie sie beispielsweise die Tragstützen 11 gem. Fig. 1 darstellen.

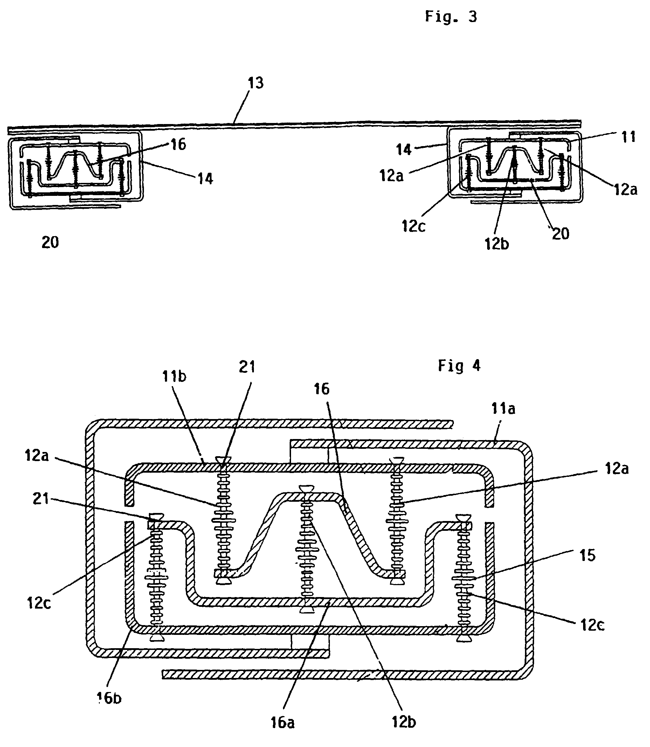

Fig. 3 zeigt einen Stehboden 13, der weitgehend mit dem Fig. 2 übereinstimmt, jedoch eine mehrstufige Pendelaufhängung aufweist. An den Tragstützen 11 des Traggestells 10 sind mehrere Pendel 12a aufgehängt, an denen eine Zwischenebene 20 gehalten wird, die ihrerseits über ein Traggerüst 16 ein weiteres Pendel 12b trägt, das dann den Stützarm 14 des Stehbodens 13 hält. Gemäß Fig. 4 hat ein sich am Boden abstützendes erstes Tragelement 11a im wesentlichen die Gestalt eines auf der Seite liegenden U und trägt einen in seinem oberen Schenkel aufgehängten Tragbügel 11b, der seinerseits mindestens drei Pendel 12a trägt, die ihrerseits einen im wesentlichen glockenförmigen Zwischenträger 16 halten. An diesem glockenförmigen Zwischenträger 16 ist über mindestens ein Pendel 12b ein topfförmiger Zwischenträger 16a gelagert, der wiederum über mindestens drei Pendel 12c einer dritten Stufe ein weiteres topfförmiges Element 16b trägt, das über einen im wesentlichen in der Gestalt eines liegenden U ausgebildeten Tragkörper unter anderem auch die obere Ebene des Gesamtkörpers bildet. Auf dieser oberen Ebene kann unmittelbar oder unter Zwischenschaltung weiterer Elemente der Stehboden 13 angeordnet werden.

Durch unterschiedliches Verhalten der jeweiligen Seilpendel, beispielsweise unterschiedliche Längen, unterschiedliche Dämpfung etc., ist das Gesamtverhalten des Stehbodens 13 in einem solchen Fall bestimmt. Durch an sich bekannte Verriegelungsmechanismen kann die eine oder die andere Gruppe der Pendel in ihrer Wirkung ausgeschaltet werden. Dem Nutzer steht dann wahlweise das Verhalten der einen oder der anderen Pendelgruppe zur Verfügung.

Es kann auch - wie in Fig. 4 dargestellt - die Möglichkeit vorgesehen werden, die Aufnahmepunktc 21 für die Pendel 12 in radialer Richtung zu variieren. Die sich aus einer solchen Maßnahme ergebenden Wirkungen sind im einzelnen in der EP-PS 0 386 202 beschrieben. Durch eine Verschiebung der Aufnahmepunkte für die Pendel 12 können diese derart verstellt werden, daß sie ein sich nach oben öffnendes oder aber ein sich nach oben verjüngendes Trapez bilden. Es bietet sich somit eine kontinuierliche Verstellmöglichkeit für die aus den Pendeln 12 und den Brücken gebildeten Anordnung und damit eine kontinuierliche Einflußnahme auf das Schwingungsverhalten. Damit hat der Benutzer die Möglichkeit das Schwingungsverhalten seinen jeweiligen Wünschen und Bedürfnissen entsprechend stufenlos anzupassen. Bei einer parallelen Einstellung der Pendel 12 ergibt sich ein normales Schwingverhalten je nach Abweichung aus der Parallelstellung der Pendel 12 in der einen oder in der anderen Richtung tritt ein vom Normfall abweichendes Schwingungsverhalten auf.

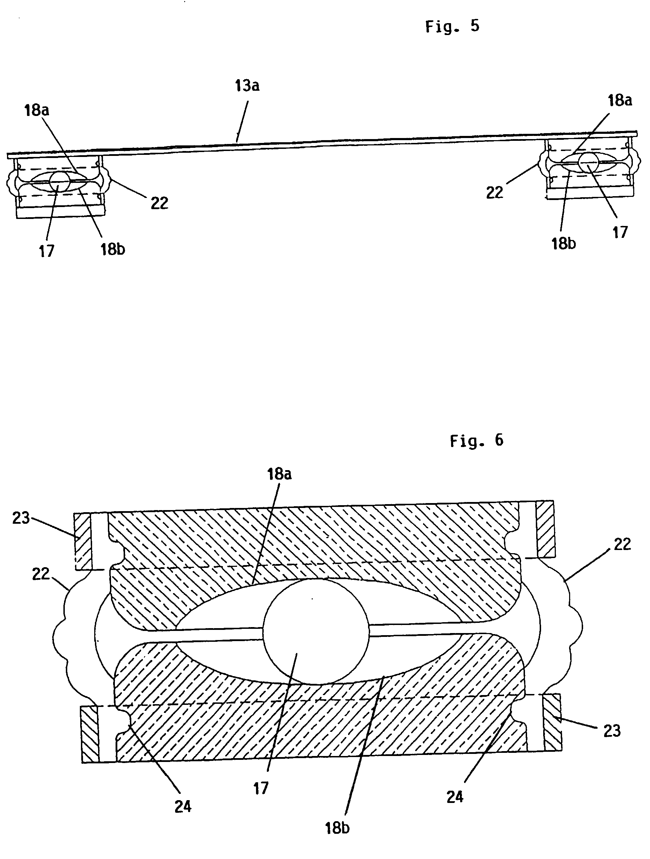

In Fig. 5 ist eine weitere Variante dargestellt, bei der die Schwingbewegung durch zwei spiegelbildlich zueinander angeordneten Kugelkalotten 18a, 18b mit großem Krümmungsradius bewirkt wird, zwischen denen sich eine Kugel 17 befindet. Die Oberflächen der Kugelkalotten 18a, 18b sind vorzugsweise gehärtet, ebenso die Oberfläche der Kugel 17. Zwischen der oberen Kugelkalotte 18a und der unteren Kugelkalotte 18b ist eine den Innenraum mit der Kugel 17 staubdicht abschließende Hülle 22 vorgesehen, die aus elastischem Material besteht und gleichzeitig eine gewisse Dämpfungswirkung auf die seitlichen Schwingbewegungen ausübt. Die Hülle 22 ist in ihren Endbereichen mit einem inneren Wulst versehen, der sich in eine entsprechende Nut 24 am Außenumfang der Kugelkalotten 18a, 18b einlegt und in dieser Position über einen Spannring 23 derart fixiert wird, daß lediglich eine elastizitätsbedingte geringfügige Verdrehung der Hülle 22 möglich ist, jedoch keine bleibende Relativbewegung zwischen dem Wulst und den Kugelkalotten 18a, 18b.

Bei etwaigen seitlichen Auslenkungen verschiebt sich die obere Kugelkalotte 18a gegenüber der unteren Kugelkalotte 18b unter Mitwirkung der Kugel 17. Dadurch wird die Kugel 17 aus der Tieflage in der Kugelkalotte 18b in eine höhere Lage verschoben und pendelt dann wieder in die Tieflage und anschließend über die Tieflage hinaus in eine Hochlage auf der anderen Seite. Daraus resultieren die seitlichen Schwingbewegungen. Im übrigen gilt das bereits zuvor mit den Ausführungsbeispielen gemäß Figuren 1 bis 4 Gesagte.

Der beschriebene Stehboden eignet sich auch für therapeutische Behandlungen eines "instabilen" Knies bzw. eines "instabilen" Sprunggelenks.

Darüber hinaus hat sich der Stehboden als therapeutisch wirksam erwiesen bei
* konstitutionellen oder lokalen Hypermobilitäten im posturalen System,
* funktionellen Fehlhaltungen der Wirbelsäule in jedem Alter,
* idiopathischen Skoliosen,
* sog. juvenilen Rundrücken,
* Skoliosierungen der Wirbelsäule, insbesondere bei Kindern und Jugendlichen.
* sog. Haltungsschwächen,
* abstehenden Schulterblättern,
* Störungen der Fußgewölbe, besonders bei Kindern,
* inkompletten, schlaffen Lähmungen im posturalen System,
* Polynerpathien, wobei Störungen der propriozeptiven Afferenz überwiegen (nicht geeignet, falls Störungen der aufsteigenden Bahnen im Rückenmark relevant vorliegen),
* Störungen der propriozeptiven Afferenz, organisch oder funktionell bedingt.

Bei einer solchen Verwendung in der Therapie wird der Stehboden zusätzlich mit einem Stützgeländer versehen, um dem Nutzer einen besseren Halt zu gewähren.

Grundsätzlich ist die Funktion durch drei Pendel 12 bzw. drei Paare von Kugelkalotten 18a, 18b gewährleistet. Je nach Bedarf können jedoch auch mehr solcher Elemente vorgesehen werden. Die Paare von Kugelkalotten 18a, 18b können funktionell hintereinander geschaltet werden. Zu diesem Zweck werden beispielsweise mehrere Stufen übereinander angeordnet, von denen jede einzelne bei Bedarf außer Funktion gesetzt werden kann. Im Ergebnis hat dies zu bedeuten, daß die einzelnen Paare von Kugelkalotten 18a, 18b der einen oder anderen Stufe durch Verriegelungsmechanismen ausgeschaltet werden können, so daß je nach Bedarf die eine oder andere Stufe allein bzw. auch mehrere Stufen gemeinsam in Funktion treten können. Da das Schwingungsverhalten, insbesondere die Frequenz, von der Gestaltung der jeweiligen Kugelkalotten 18a, 18b abhängen, kann so erreicht werden, daß durch Verriegelung der einen oder anderen Stufe nur ganz bestimmte vorgegebene Frequenzen zur Wirkung kommen. Der Nutzer kann sich damit die seinen jeweiligen individuellen Bedürfnissen entsprechenden optimalen Eigenfrequenzen in gewissem Rahmen selbst wählen.

Der Grundriß des Stehbodens 13, 13a kann rechteckig, quadratisch, kreisrund oder auch von anderer Gestalt sein.

## Patentansprüche

1. Schwingfähiger Stehboden mit einem relativ zum auf dem Boden stehenden Unterteil beweglichen Oberteil, wobei Oberteil und Unterteil durch Schwingelemente miteinander verbunden sind und die Schwingelemente (12, 12a, 12b, 12c bzw. 17, 18a, 18b) in horizontaler Ebene schwingfähig sind, dadurch gekennzeichnet, daß die Schwingelemente (12, 12a, 12b, 12c bzw. 17, 18a, 18b) verschiedener Stufen und mit unterschiedlichen Eigenfrequenzen funktional hintereinandergeschaltet und die Schwingelemente jeweils einer oder mehrerer Stufen wahlweise arretierbar sind.

2. Stehboden nach Anspruch 1, dadurch gekennzeichnet, daß es sich bei den Schwingelementen um Pendel (12 bis 12c) handelt.

3. Stehboden nach Anspruch 1, dadurch gekennzeichnet, daß es sich bei den Schwingelementen um zwischen Innenflächen von Kugelkalotten (18a, 18b) bestimmter Radien gelagerte Kugeln (17) handelt.

4. Stehboden gemäß Anspruch 2, dadurch gekennzeichnet, daß es sich um Pendel (12 bis 12c) handelt, die an beiden Enden mit jeweils einem Einspannkopf versehen sind und mit Ausnahme einer kurzen Zone in den Endbereichen des Pendels über dessen Länge verteilt eine Vielzahl von wulstartigen, relativ starren Körpern (15) mit nur geringem gegenseitigen Abstand voneinander perlenähnlich angeordnet sind.

5. Stehboden nach Anspruch 2, dadurch gekennzeichnet, daß die Seele des Pendels (12 bis 12c) in den Zwischenräumen zwischen den perlenähnlich angeordneten wulstartigen Körpern (15) mit einem elastischen Überzug umgeben ist.

6. Stehboden nach Anspruch 4 oder 5, dadurch gekennzeichnet, daß sowohl die perlenähnlich angeordneten wulstartigen Körper (15) als auch die Seele des Pendels in den Zwischenräumen zwischen den Körpern (15) insgesamt mit dem elastischen Überzug umgeben sind.

7. Stehboden nach Anspruch 3, dadurch gekennzeichnet, daß die Krümmungsradien der Innenflächen der Kugelkalotten (18a, 18b) im Hinblick auf bestimmte Schwingungs-Eigenfreqenzen gewählt sind.

8. Stehboden nach einem der Ansprüche 3 oder 7, dadurch gekennzeichnet, daß die Kugeln (17) und die Innenflächen der Kugelkalotten (18a, 18b) aus gehärtetem Stahl bestehen.

9. Stehboden nach einem der Ansprüche 3, 7 oder 8, dadurchgekennzeichnet, daß die Schalen der korrespondierenden Kugelkalotten (18a, 18b) mit einer sie gemeinsam umgebenden Hülle (22) oder mit einem elastischen Balg versehen sind.

10. Stehboden nach einem der Ansprüche 3, 7, 8 oder 9, dadurch gekennzeichnet, daß die Kugelkalotten (18a, 18b) an ihrem Außenumfang mit einer Umfangsnut (24) zur Aufnahme eines entsprechenden Wulstes der Hülle (22) versehen ist.

11. Stehboden nach Anspruch 10, dadurch gekennzeichnet, daß jeweils ein der Fixierung dienender Spannring (23) die Hülle (22) an den Kugelkalotten (18a, 18b) axial und drehfest fixiert.

## Claims

1. Oscillatory floor with an upper part movable relative to the lower part standing on the ground, wherein the upper part and lower part are connected together by swing elements and the swing elements (12, 12a, 12b, 12c or 17, 18a, 18b) are oscillatable in horizontal plane, characterised in that the swing elements (12, 12a, 12b, 12c or 17, 18a, 18b) of different stages and with different natural frequencies are functionally connected one behind the other and the swing elements respectively of one or more stages are selectably lockable.

2. Floor according to claim 1, characterised in that the swing elements are pendulating members (12 to 12c).

3. Floor according to claim 1, characterised in that the swing elements are balls (17) mounted between inner surfaces of ball guides (18a, 18b) of specific radii.

4. Floor according to claim 2, characterised in that the pendulating members (12 to 12c) are each provided at each of both ends with a respective clamping head, and a plurality of bead-like, relatively rigid bodies (15) are arranged distributed over the length of the pendulating member with the exception of a short zone in the end regions thereof in the manner of pearls at only a small mutual spacing from one another.

5. Floor according to claim 2, characterised in that the core of the pendulating member (12 to 12c) is surrounded by a resilient covering in the intermediate spaces between the bead-like bodies (15) arranged in the manner of pearls.

6. Floor according to claim 4 or 5, characterised in that the bead-like bodies (15) arranged in the manner of pearls and also the core of the pendulating member are completely surrounded by the resilient covering in the intermediate spaces between the bodies (15).

7. Floor according to claim 3, characterised in that the radii of curvature of the inner surfaces of the ball guides (18a, 18b) are selected by reference to specific natural frequencies of oscillation.

8. Floor according to one of claims 3 and 7, characterised in that the balls (17) and the inner surfaces of the balls guides (18a, 18b) consist of hardened steel.

9. Floor according to one of claims 3, 7 and 8, characterised in that the shells of the corresponding ball guides (18a, 18b) are provided with a sheathing (22) jointly enclosing them or with a resilient bellows.

10. Floor according to one of claims 3, 7, 8 and 9, characterised in that the ball guides (18a, 18b) are provided at their outer circumference with a circumferential groove (24) for reception of a corresponding bead of the sheathing (22).

11. Floor according to claim 10, characterised in that a respective clamping ring (23) serving for fixing fixes the sheathing (22) to the ball guides (18a, 18b) axially and rotationally fast.

## Revendications

1. Plateau vibrant comportant une partie supérieure mobile par rapport à une partie inférieure posée sur le sol, les parties supérieure et inférieure étant reliées l'une à l'autre par des éléments vibrants (12, 12a, 12b, 12c, respectivement 17, 18a, 18b) qui peuvent vibrer dans un plan horizontal **caractérisé en ce que** les éléments vibrants (12, 12a, 12b, 12c, respectivement 17, 18a, 18b) sont de degrés différents, ont des fréquences propres différentes, sont montés en série d'un point de vue fonctionnel et peuvent être arrêtés au choix pour un ou plusieurs degrés.

2. Plateau vibrant selon la revendication 1 **caractérisé en ce que** les éléments vibrants sont constitués de pendules (12 à 12c).

3. Plateau vibrant selon la revendication 1 **caractérisé en ce que** les éléments vibrants sont constitués de billes (17) logées entre les surfaces intérieures de coques en forme de calottes (18a), (18b) de rayon déterminé.

4. Plateau vibrant la revendication 2 **caractérisé en ce que** les pendules sont pourvus à chacune de leurs extrémités d'une tête de serrage et **en ce que** de nombreux corps (15) en forme de bourrelets relativement rigides sont répartis sur toute la longueur des pendules, à l'exception d'une courte zone à leurs extrémités, en étant enfilés à la manière de perles disposées à une petite distance réciproque.

5. Plateau vibrant selon la revendication 2 **caractérisé en ce que** la partie de l'âme du pendule (12 à 12c) située entre les corps (15) en forme de bourrelets enfilés comme des perles, est recouverte d'un revêtement élastique.

6. Plateau vibrant selon les revendications 4 ou 5 **caractérisé en ce que** tant les corps (15) en forme de bourrelets enfilés comme des perles que l'âme du pendule située entre lesdits corps (15) sont recouverts d'un revêtement élastique.

7. Plateau vibrant selon la revendication 3 **caractérisé en ce que** les rayons de courbure des surfaces intérieures des coques en forme de calottes (18a), (18b) sont choisis en considération de fréquences propres d'oscillation déterminées.

8. Plateau selon l'une des revendications 3 ou 7 **caractérisé en ce que** les billes (17) et les surfaces intérieures des coques en forme de calottes (18a), (18b) sont en acier durci.

9. Plateau vibrant selon l'une des revendications 3, 7 ou 8 **caractérisé en ce que** les coques associées en forme de calottes (18a), (18b) sont pourvues d'une enveloppe (22) commune les entourant ou d'un manchon élastique.

10. Plateau vibrant selon l'une des revendications 3, 7, 8 ou 9 **caractérisé en ce que** les coques en forme de calottes (18a), (18b) sont pourvues extérieurement d'une rainure périphérique (24) destinée à recevoir un bourrelet correspondant de l'enveloppe (22).

11. Plateau vibrant selon la revendication 10 **caractérisé par** un anneau tendeur (23) servant à fixer, axialement et contre tout risque de rotation, l'enveloppe (22) sur les coques en forme de calotte (18a), (18b).
